# EUROPEAN PATENT APPLICATION

(11) **EP 1 418 708 A2**
(43) Date of publication of application: **12.05.2004**
(21) Application number: 03300151.2
(22) Date of filing: 13.10.2003
(51) Int. Cl.: H04L 12/24

(54) **Method and apparatus for managing nodes in a network**

(30) Priority: 15.10.2002 US 271599
(71) Applicant: Alcatel Canada Inc., Kanata, Ontario K2K 2E6 (CA)
(72) Inventor: Rajsic, Carl, Nepean, Ontario K2H 1E4 (CA); Petti, Antonio, Kanata, Ontario K2L 2V3 (CA); Charbonneau, Martin, Ottawa, Ontario K2L 2E4 (CA)
(74) Representative: Lenne, Laurence

(57) **Abstract**

The present invention comprises a method and apparatus for managing nodes of a network. In one embodiment, the invention is implemented as part of a computer based network management system. The system allows a network operator to select, view and modify the configuration of a logical group node at any level of a network hierarchy. The configuration of a logical group node may include, without limitation, logical group node attributes, summary addresses, and any other information that may be relevant to implementing the desired function of a logical group node. After a change is made to the configuration of a logical group node, the system automatically identifies all physical nodes that may potentially function as the logical group node whose configuration has changed, and causes the configurations of the logical group node to be updated on the identified physical nodes to reflect the change made to the logical group node. In this manner, modifications made to a logical group node are automatically propagated to all physical nodes, at lower levels of hierarchy therein, that might run the logical group node function, eliminating the need to manually update each physical node's configuration one physical node at a time. The invention may be used with any network that involves the aggregation of physical nodes into a hierarchy of logical group nodes, including, without limitation, networks using the PNNI and IP protocols.

## Description

The present invention relates to the field of data communications networks, and more particularly to a method and apparatus for managing nodes of a network.

Switching systems (also referred to as "switching networks") and routing systems (also referred to as "routers") route data through and among data communications networks. Switching systems typically comprise a plurality of switches (also called "nodes") and clusters of switches that provide data communications paths among elements of data communications networks. Routing systems typically comprise a plurality of routers and clusters of routers that provide data communication paths among elements of data communications networks.

The "topology" of a switching or routing network refers to the particular arrangement and interconnections (both physical and logical) of the nodes of a switching network or routing network. Knowledge of the topology of a switching or routing network is used to compute communications paths through the network, and route calls.

For systems that comprise a small number of individual nodes, the topology is fairly straightforward and can be described by identifying the individual nodes in the system and the communications links between them. For larger and more complex networks, however, the amount of data needed to identify all links between all nodes of the network and their characteristics can be quite extensive.

A number of approaches have been proposed to reduce the amount of information needed to describe the topology of complex networks. One approach involves grouping physical nodes into logical groups ("peer groups") that are viewed as individual logical nodes ("logical group nodes") having characteristics that comprise an aggregation of the characteristics of the individual nodes within the group. Such logical group nodes may be further grouped with other physical and/or logical nodes to form successively higher level peer groups, creating a hierarchy of peer groups and logical group nodes. Another approach involves grouping routers into areas (or network segments) where each area is also interconnected by routers. Some routers inside an area are used to attach to other areas and are called area border routers, or ABRs. Area border routers summarize addressing (and other) information about the area to other ABRs in other areas. This creates a two-level hierarchical routing scheme creating a hierarchy of areas that are interconnected by area border routers.

### The PNNI Protocol

One example of a network that allows physical nodes to be grouped into levels of logical groups of nodes is a "PNNI" network. PNNI, which stands for either "Private Network Node Interface" or "Private Network Network Interface," is a protocol developed by the ATM Forum. The PNNI protocol is used to distribute topology information between switches and clusters of switches within a private ATM switching network. Details of the PNNI protocol can be found in various publications issued by the ATM Forum, including "Private Network Network Interface Specification Version 1.1 (PNNI 1.1 )," publication No. af-pnni-0055.002, available at the ATM Forum's website at www.atmforum.com.

A "PNNI network" is a network that utilizes the PNNI protocol. Some basic features of a PNNI network are described below. It should be noted, however, that these features are not exclusive to PNNI networks. The same or similar features may be utilized by networks using other and/or additional protocols as well, such as, for example, IP networks using the OSPF ("Open Shortest Path First) protocol. Additional details regarding the OSPF protocol may be found, for example, in Moy, J. *OSPF Version 2.* RFC 2178, July 1997.

### Physical Nodes

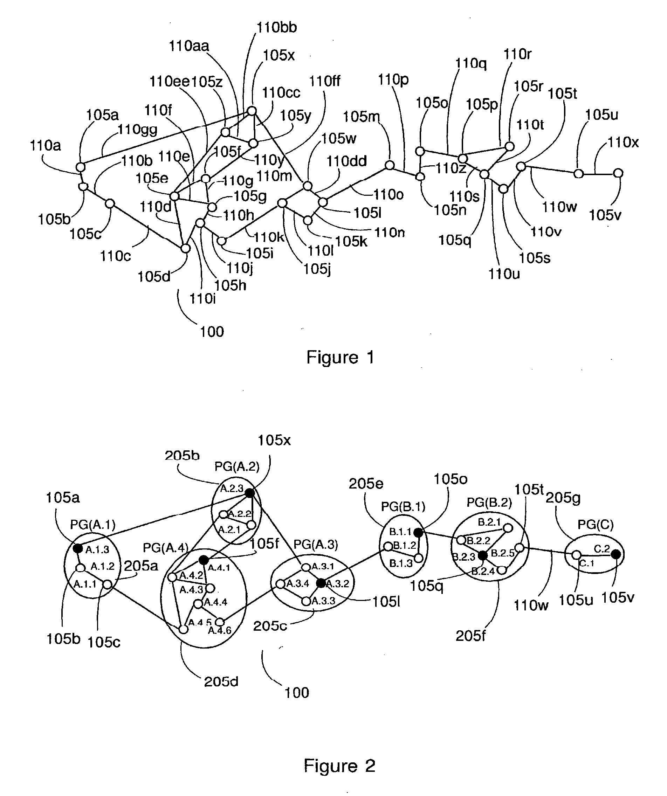

Figure 1 shows an example network 100 comprising twenty-six (26) physical nodes (also referred to as "lowest level nodes") 105a-z. Nodes 105a-z are interconnected by thirty three (33) bi-directional communications links 110a-gg.

Although network 100 is relatively small, identifying its topology is already fairly complex. One way that such identification may be accomplished is for each node to periodically broadcast a message identifying the sending node as well as the other nodes that are linked to that node. For example, node 105a would broadcast a message announcing "I'm node 105a and I can reach nodes 105b and 105x." Similarly, node 105x would broadcast "I'm node 105x and I can reach nodes 105a, 105w, 105y, and 105z." Each of the other 24 nodes 105c-z of network 100 would broadcast similar messages. Each node 105a-z would receive all the messages of all other nodes, store that information in memory, and use that information to make routing decisions when data is sent from that node to another. Although not included in the above simple messages, the broadcast messages may contain additional connectivity information. For example, instead of a node simply identifying nodes that it can reach directly, the node may also provide more detailed information. For example, a node could say "I can reach node *w* via link *x* with a bandwidth of *y* and a cost of *z*."

Although each node broadcasting its individual connectivity information to all other nodes allows each node in a network to deduce the overall topology of the network, such massive broadcasting, particularly in large networks, consumes a significant amount of network bandwidth. Networks such as PNNI networks reduce this overhead by grouping nodes into a hierarchy of node groups called "peer groups."

### Peer Group and Logical Nodes

An important concept in PNNI and other hierarchical networks is a "logical node". A logical node is viewed as a single node at its level in the hierarchy, although it may represent a single physical node (in the case of the lowest hierarchy level or a single member group) or a group of physical nodes (at higher hierarchy levels). In a PNNI network, logical nodes are uniquely identified by "logical node IDs".

A peer group ("PG") is a collection of logical nodes, each of which exchanges information with other members of the group such that all members maintain an identical view of the group. Logical nodes are assigned to a particular peer group by being configured with the "peer group ID" for that peer group. Peer group IDs are specified at the time individual physical nodes are configured. Neighboring nodes exchange peer group IDs in "Hello packets". If they have the same peer group ID then they belong to the same peer group.

Construction of a PNNI hierarchy begins by organizing the physical nodes (also referred to as "lowest level" nodes) of the network into a first level of peer groups. Figure 2 shows network 100 of Figure 1 organized into 7 peer groups 205a-g. For simplicity, the nodes in Figure 2 are depicted as being in close proximity with each other. That is not required. The nodes of a peer group may be widely dispersed - they are members of the same group because they have been configured with the same peer group ID, not because they are in close physical proximity.

In Figure 2, peer group 205a is designated peer group "A.1." Similarly, peer groups 205b-g are designated peer groups "A.2," "A.3," "A.4," "B.1," "B.2," and "C," respectively. A peer group is sometimes referred to herein by the letters "PG" followed by a peer group number. For example, "PG(A.2)" refers to peer group A.2 205b. Node and peer group numbering, such as A.3.2 and A.3, is an abstract representation used to help describe the relation between nodes and peer groups. For example the designation of "A.3.2" for node 105l indicates that it is located in peer group A.3 205c.

### Logical Links

Under the PNNI protocol, logical nodes are connected by "logical links". Between lowest level nodes, a logical link is either a physical link (such as links 110a-gg of Figure 1) or a virtual private channel ("VPC") between two lowest-level nodes. Logical links inside a peer group are sometimes referred to as "horizontal links" while links that connect two peer groups are referred to as "outside links".

### Information Exchange in PNNI

Nodes can be configured with information that affects the type of state information it advertises. Each node bundles its state information in "PNNI Topology State Elements" (PTSEs), which are broadcast ("flooded") throughout the peer group. A node's topology database consists of a collection of all PTSEs received by other nodes, which together with its local state information, represent that node's present view of the PNNI routing domain. The topology database provides all the information required to compute a route from the given node to any address reachable in or through the routing domain.

### Nodal Information

Every node generates a PTSE that describes its own identity and capabilities, information used to elect the peer group leader, as well as information used in establishing the PNNI hierarchy. This is referred to as the nodal information. Nodal information includes topology state information and reachability information.

Topology state information includes "link state parameters", which describe the characteristics of logical links, and "nodal state parameters", which describe the characteristics of nodes. Reachability information consists of addresses and address prefixes that describe the destinations to which calls may be routed via a particular node.

### Flooding

"Flooding" is the reliable hop-by-hop propagation of PTSEs throughout a peer group. Flooding ensures that each node in a peer group maintains an identical topology database. Flooding is an ongoing activity.

### Peer Group Leader

A peer group is represented in the next higher hierarchical level as a single node called a "logical group node" or "LGN." The functions needed to perform the role of a logical group node are executed by a node of the peer group, called the "peer group leader." There is at most one active peer group leader (PGL) per peer group (more precisely at most one per partition in the case of a partitioned peer group). However, the function of peer group leader may be performed by different nodes in the peer group at different times.

The particular node that functions as the peer group leader at any point in time is determined via a "peer group leader election" process. The criteria for election as peer group leader is a node's "leadership priority," a parameter that is assigned to e ach physical node at configuration time. The node with the highest leadership priority in a peer group becomes leader of that peer group. The election process is a continuously running protocol. When a node becomes active with a leadership priority higher than the PGL priority being advertised by the current PGL, the election process transfers peer group leadership to the newly activated node. When a PGL is removed or fails, the node with the next highest leadership priority becomes PGL.

In the network of Figure 2, the current PGLs are indicated by solid circles. Thus node A.1.3 105a is the peer group leader of peer group A.1 205a, node A.2.3. 105x is the PGL of PG(A.2) 205b, node A.4.1 105f is the PGL of PG(A.4) 205d, node A.3.2 1051 is the PGL of PG(A.3) 205c, node B.1.1 105o is the PGL of PG(B. 1) 205e, node B.2.3 105q is the PGL of PG(B.2) 205f, and node C.2 105v is the PGL of PG(C) 205g.

### Next Higher Hierarchical Level

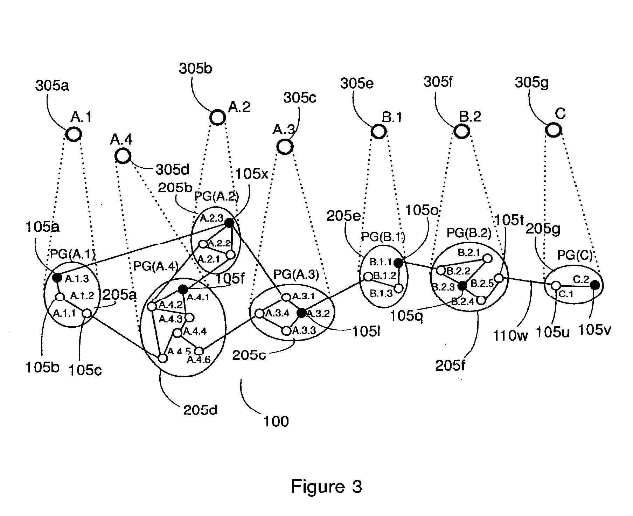

The logical group node for a peer group represents that peer group as a single logical node in the next higher ("parent") hierarchy level. Figure 3 shows how peer groups 205a-g are represented by their respective LGN's in the next higher hierarchy level. In Figure 3, PG(A.1) 205a is represented by logical group node A.1 305a, PG(A.2) 205bis represented by logical group node A.2 305b, PG(A.3) 205c is represented by logical group node A.3 305c, PG(A.4) 205d is represented by logical group node A.4 305d, PG(B.1) 205e is represented by logical group node B.1 305e, PG(B.2) 205f is represented b y logical group node B.2 305f and PG(C) 205g is represented by logical group node C 305g. Through the use of peer groups and logical group nodes, the 26 physical nodes 105a-z of Figure 1 can be represented by the seven logical nodes 305a-g of Figure 3.

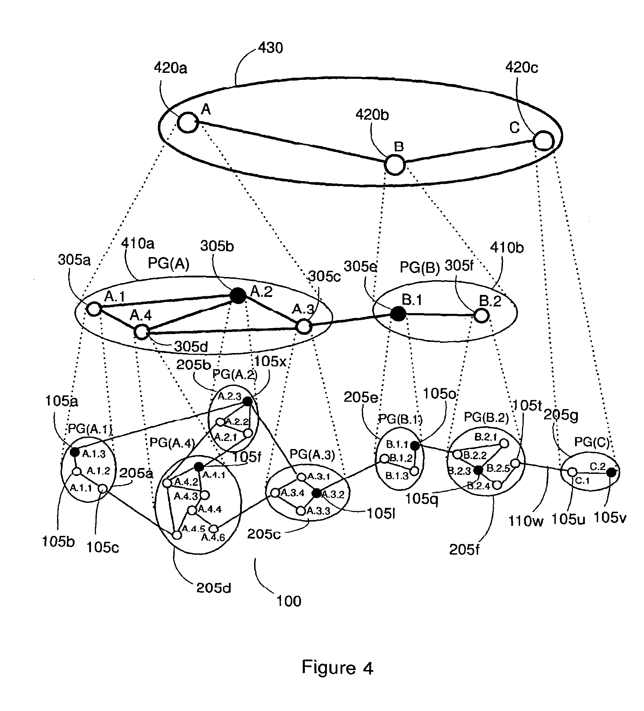

Logical nodes 305a-g of Figure 3 may themselves be further grouped into peer groups. Figure 4 shows one way that peer groups 205a-f of Figure 2, represented by logical group nodes 305a-f of Figure 3, can be organized into a next level of peer group hierarchy.

In Figure 4, LGN's 305a, 305b, 305c and 305d, representing peer groups A.1 205a, A.2 205b, A.3 205c, and A.4 205d, respectively have been grouped into peer group A 41 0a, and LGNs 305e and 305f representing peer groups B.1 205e and B.2 205f have been grouped into peer group B 410b. LGN 305g representing peer group C 205g is not represented by a logical group node at this level. Peer group A 41 0a is called the "parent peer group" of peer groups A.1 205a, A.2 205b, A.3 205c and A.4 205d. Conversely, peer g roups A.1 205a, A.2 205b, A.3 205c and A.4 205d are called "child peer groups" of peer group A 410a.

### Progressing To The Highest Level Peer Group

The PNNI hierarchy is incomplete until the entire network is encompassed in a single highest level peer group. In the example of Figure 4 this is achieved by configuring one more peer group 430 containing logical group nodes A 420a, B 420b and C 420c. The network designer controls the hierarchy via configuration parameters that define the logical nodes and peer groups.

The hierarchical structure of a PNNI network is very flexible. The upper limit on successive, child/parent-related peer groups is given by the maximum number of ever shorter address prefixes that can be derived from the longest 13 octet address prefix This equates to 104, which is adequate for most networks, since even international networks can typically be more than adequately configured with less than 10 levels of ancestry.

### Recursion in the Hierarchy

The creation of a PNNI routing hierarchy can be viewed as the recursive generation of peer groups, beginning with a network of lowest-level nodes and ending with a single top-level peer group encompassing the entire PNNI routing domain. The hierarchical structure is determined by the way in which peer group IDs are associated with logical group nodes via configuration of the physical nodes.

Generally, the behavior of a peer group is independent of its level. However, the highest level peer group differs in that it does not need a peer group leader since there is no parent peer group for which representation by a peer group leader would be needed. Address Summarization & Reachability

Address summarization reduces the amount of addressing information that needs to be distributed in a PNNI network. Address summarization is achieved by using a single "reachable address prefix" to represent a collection of end system and/or node addresses that begin with the given prefix. Reachable address prefixes can be either summary addresses or foreign addresses.

A "summary address" associated with a node is an address prefix that is either explicitly configured at that node or that takes on some default value. A "foreign address" associated with a node is an address which does not match any of the node's summary addresses. By contrast a "native address" is an address that matches one of the node's summary addresses.

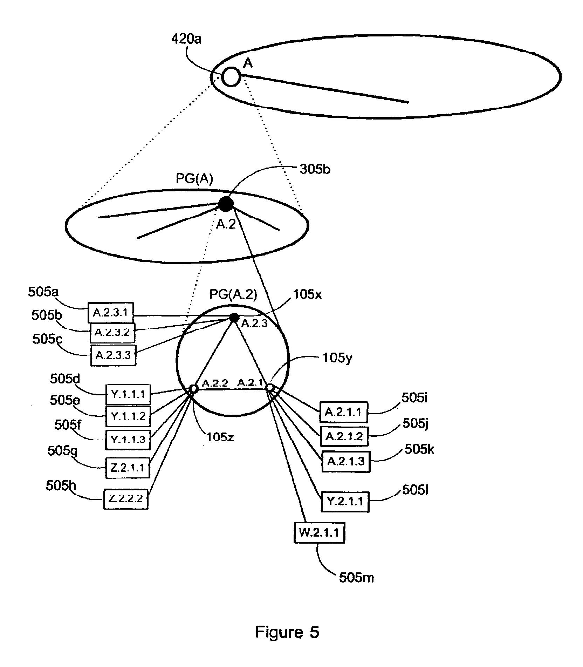

These concepts are clarified in the example depicted in Figure 5 which is derived from Figure 4. The attachments 505a-m to nodes A.2.1 105y, A.2.2 105z and A.2.3 105x represent end systems. The alphanumeric associated with each end system represents that end system's ATM address. For example <A.2.3.2> associated with end system 505b represents an ATM address, and P<A.2.3>, P<A.2>, and P<A> represent successively shorter prefixes of that same ATM address.

An example of summary addresses information that can be used for each node in peer group A.2 205b of Figure 5 is shown in Table 1:

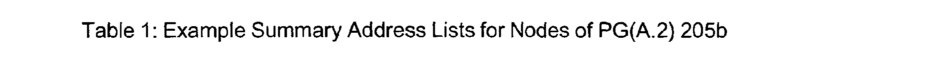

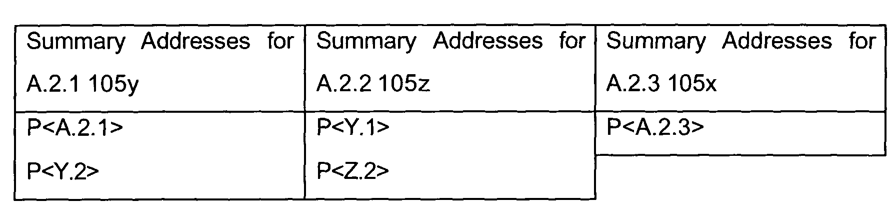

The summary address information in Table 1 represents prefixes for addresses that are advertised as being reachable via each node. For example, the first column of Table 1 indicates that node A.2.1 105y advertises that addresses having prefixes "A.2.1" and "Y.2" are reachable through it. For the chosen summary address list at A.2.1, P<W.2.1.1> is considered a foreign address for node A.2.1 because although it is reachable through the node, it does not match any of its configured summary addresses.

Summary address listings are not prescribed by the PNNI protocol but are a matter of the network operator's choice. For example, the summary address P<Y.1.1> could have been used instead of P<Y. > at node A.2.2 105z or P<W> could have been included at node A.2.1 105y. But P<A.2> could not have been chosen (instead of P<A.2.1> or P<A.2.3>) as a summary address at nodes A.2.1 105y and A.2.3 105x because a remote node selecting a route would not be able to differentiate between the end systems attached to node A.2.3 105x and the end systems attached to node A.2.1 105y (both of which include end systems having the prefix A.2).

Moving up the next level in the hierarchy, logical group node A.2 305b needs its own list of summary addresses. Here again there are different alternatives that can be chosen. Because "PG(A.2)" is the ID of peer group A.2 205b, it is reasonable to include P<A.2> in the summary address list. Further, because summary addresses P<Y.1> and P<Y.2> can be further summarized by P<Y>, and because summary addresses P<Z.2.1 > and P<Z.2.2> can be further summarized by P<Z.2>, it makes sense to configure P<Y> and P<Z.2> as summary addresses as well. The resulting summary address list for logical group node A.2 305b is shown in Table 2:

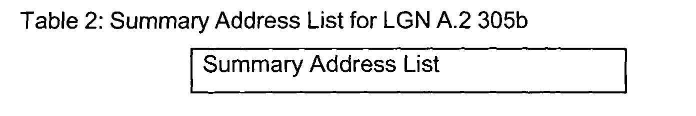

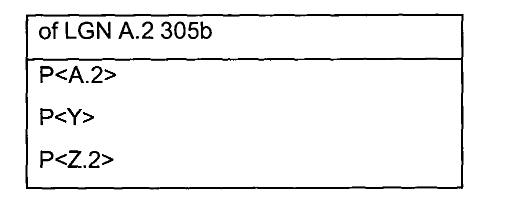

Table 3 shows the reachable address prefixes advertised by each node in peer group A.2 205b according to their summary address lists of Table 1. A node advertises the summary addresses in its summary address list as well as foreign addresses (i.e. addresses not summarized in the summary address list) reachable through the node:

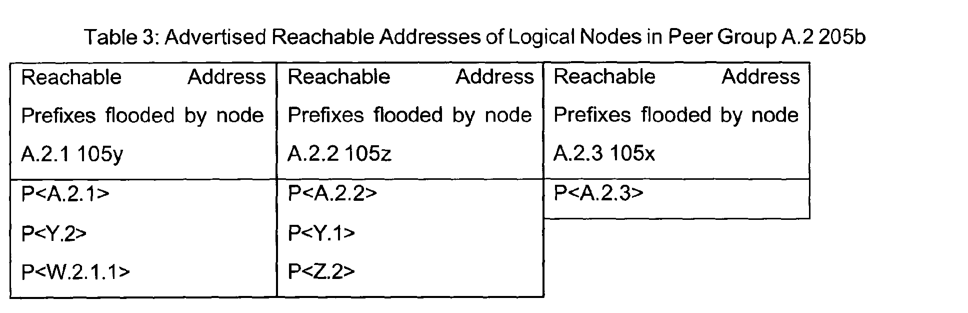

In the example of Table 3, node A.2.1 floods its summary addresses (P<A.2.1>, and P<Y.2>) plus its foreign address (P<W.2.1.1) whereas nodes A.2.2 and A.2.3 only issue their summary addresses since they lack any foreign addressed end systems.

Reachability information, i.e., reachable address prefixes (and foreign addresses), are fed throughout the PNNI routing hierarchy so that all nodes can reach the end systems with addresses summarized by these prefixes. Afiltering is associated with this information flow to achieve further summarization wherever possible, i.e. LGN A.2 305b attempts to summarize every reachable address prefix advertised in peer group A.2 205b by matching it against all summary addresses contained in its list (see Table 2). For example when LGN A.2 305b receives (via PGL A.2.3 105x) the reachable address prefix P<Y.1 > issued by node A.2.2 105z (see Table 1) and finds a match with its configured summary address P<Y>, LGN A.2 305b achieves a further summarization by advertising its summary address P<Y> instead of the longer reachable address prefix P<Y.1>.

There is another filtering associated with advertising of reachability information to limit the distribution of reachable address prefixes. By associating a "suppressed summary address" with the address(es) of end system(s), advertising by an LGN of that summary address is inhibited. This option allows some addresses in the lower level peer group to be hidden from higher levels of the hierarchy, and hence other peer groups. This feature can be implemented for security reasons, making the presence of a particular end system address unknown outside a certain peer group. This feature is implemented by including a "suppressed summary address" in the summary address list of an LGN.

Reachable address prefixes that cannot be further summarized by an LGN are advertised unmodified. For example when LGN A.2 305b receives the reachable address prefix P<Z.2> issued by A.2.2 105z, the match against all its summary addresses (Table 2) fails, consequently LGN A.2 305b advertises P<Z.2> unmodified. Note that LGN A.2 305b views P<Z.2> as foreign since the match against all its summary addresses failed, even though P<Z.2> is a summary address from the perspective of node A.2.2. The resulting reachability information advertised by LGN A.2 305b is listed in Table 4:

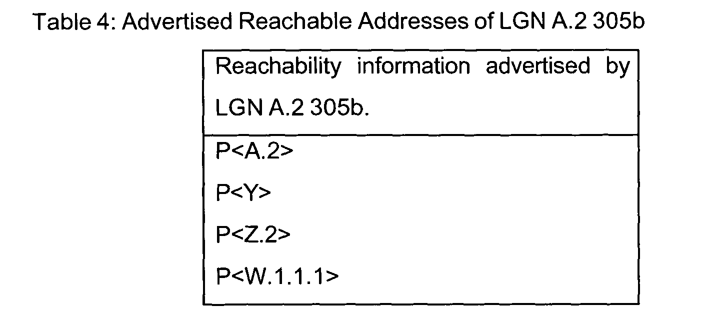

It should be noted that the reachability information advertised by node A.2.3 105x shown in Table 3 is different from that advertised by LGN A.2 305b shown in Table 4, even though node A.2.3 105x is PGL of peer group A.2 205b. The reachability information advertised by LGN A.2 305b is the only reachability information about peer group A.2 205b available outside of the peer group, regardless of the reachability information broadcast by the peer group members themselves.

The relationship between LGN A420a and peer group leader A.2 305b is similarto the relationship between LGN A.2 305b and peer group leader A.2.3 105x. If LGN A 420a is configured without summary addresses, then it would advertise all reachable address prefixes that are flooded across peer group A 410a into the highest peer group (including the entire list in Table 4). On the other hand if LGN A 420a is configured with the default summary address P<A> (default because the ID of peer group A 410a is "PG(A)") then it will attempt to further summarize every reachable address prefix beginning with P<A> before advertising it. For example it will advertise the summary address P<A> instead of the address prefix P<A.2> (see Table 4) flooded by LGN A.2 305b.

The ATM addresses of logical nodes are subject to the same summarization rules as end system addresses. The reachability information (reachable address prefixes) issued by a specific PNNI node is advertised across and up successive (parent) peer groups, then down and across successive (child) peer groups to eventually reach all PNNI nodes lying outside the specified node.

### Address Scoping

Reachability information advertised by a logical node always has a scope associated with it. The scope denotes a level in the PNNI routing hierarchy, and it is the highest level at which this address can be advertised or summarized. If an address has a scope indicating a level lower than the level of the node, the node will not advertise the address. If the scope indicates a level that is equal to or higher than the level of the node, the address will be advertised in the node's peer group.

When summarizing addresses, the address to be summarized with the highest scope will determine the scope of the summary address. The same rule applies to group addresses, i.e. if two or more nodes in a peer group advertise reachability to the same group address but with different scope, their parent node will advertise reachability to the group address with the highest scope.

It should be noted that rules related to address suppression take precedence over those for scope. That is, if the summary address list for an LGN contains an address suppression, that address is not advertised even if the scope associated with the address is higher than the level of the LGN.

### Logical Group Node Functions

The functions of a logical group node are carried out by the peer group leader of the peer group represented by the logical group node. These functions include aggregating and summarizing information about its child peer group and flooding that information and any locally configured information through its own peer group. A logical group node also passes information received from its peer group to the PGL of its child peer group for flooding (note that the PGL of its child peer group typically runs on the same physical switch running the LGN). In addition, a logical group node may be a potential peer group leader of its own peer group. In that case, it should be configured so as to be able to function as a logical group node at one or more higher levels as well.

The manner in which a peer group is represented at higher hierarchy levels depends on the policies and algorithms of the peer group leader, which in turn are determined by the configuration of the physical node that functions as the peer group leader. To make sure that the peer group is represented in a consistent manner, all physical nodes that are potential peer group leaders should be consistently configured. However, some variation may occur if the physical nodes have different functional capabilities.

Higher level peer groups 410a-b of Figure 4 operate in the same manner as lower level peer groups 205a-g. The only difference is that each of its nodes represents a separate lower level peer group instead of a physical node. Just like peer groups 205a-g, peer group A 410a has a peer group leader (logical group node A.2 305b) chosen by the same leader election process used to elect leaders of lower level peer groups 205a-g. For the peer group leader of PG A 410a (namely logical group node A.2 305b) to be able to function as the peer group leader, the functions and information that define LGN A 420a should be provided to (or configured on) LGN A.2 305b, which is in turn implemented on lowest-level node A.2.3 105x (which is the current peer group leader for peer group A.2 205b). Accordingly, physical node A.2.3 105x should be configured not just to function as LGN A.2 305b, but also as LGN A 420a, since it has been elected PGL for PG(A.2) 205b and PG(A) 410a. Any other potential peer group leaders of peer group A.2 205b that may need to run LGN A.2 305b should be similarly configured. For example, if lowest level node A.2.2 can take over PGL responsibilities, it should be configured with info rmation to run as LGN A.2 305b as well. Furthermore, if any other LGN's of peer group A 410a are potential peer group leaders (which is the usual case), all physical nodes that run as such LGN's in PG(A) 410a (or might potentially run as such LGN in PG(A) 410a) should also be configured to function as LGN A 420a.

### Configuration Issues

The PNNI hierarchy is a logical hierarchy. It is derived from an underlying network of physical nodes and links based on configuration parameters assigned to each individual physical node in the network, and information about a node's configuration sent by each node to its neighbor nodes (as described above).

Configuring a node may involve several levels of configuration parameters, particularly in the case where a physical node is a potential peer group leader and therefore should be able to run a LGN function. If a physical node is a potential peer group leader that should be able to run as an LGN in the parent peer group, in addition to being configured with configuration parameters for the node itself (e.g. node ID, peer group ID, peer group leadership priority, address scope, summary address list, etc.), the node needs to be configured with the proper configuration parameters to allow it to function as an LGN in the parent PG (i.e. node ID, peer group ID, peer group leadership priority, summary address list, etc.). Such configuration information may be referred to as the parent LGN configuration. If a parent logical group node that is also running on the physical node is a potential peer group leader for its own peer group, then the physical node should be provided with appropriate configuration information to act as a grandparent logical group node in the next higher hierarchy level above the parent LGN. As a result, depending on how it and its related higher level LGN's are configured, a physical node may contain LGN configurations for any number of hierarchy levels.

All nodes (lowest level nodes and logical group nodes) that have been assigned a non-zero leadership priority within their peer group are potential peer group leaders. In practice, for purposes of redundancy, multiple nodes in each peer group are assigned non-zero leadership priorities and may be elected as the PGL and run a particular LGN function in a parent or grandparent peer group. Accordingly, there are usually many physical nodes (within a child peer group of an LGN) that should be configured with identical information about an LGN in order to perform the functions for that LGN, in case such a physical node were to be elected as the PGL of its peer group or parent peer group. Those same physical nodes that might run the function of the LGN should also be reconfigured if any changes are made to the configuration of the logical group node.

If, for example, the network manager for the network of Figure 4 wants to modify the summary address list for logical group node A 420a, the network operator needs to identify each physical node that can potentially function as logical node A 420a and separately configure each such physical node with the new summary address list for logical group node A 420a. If all logical group nodes in peer group A 410a and all physical nodes in peer groups A.1 105a, A.2 105b, A.3 105c and A.4 105d have been configured with non-zero leadership priorities (meaning they are all potential peer group leaders who may be called on to function as logical group node A 420a), the network operator must manually configure sixteen separate physical nodes to make the desired change.

As can be seen from the above example, the effort involved in making even a simple change to just a third level logical node in the simple network of Figure 4 is already significant. For a typical network containing hundreds of nodes, the effort required to achieve a reconfiguration of a higher level logical group node can be enormous, manually intensive and very expensive. This creates a disincentive for network operators to grow their networks using a networking protocol such as PNNI, due to additional costs required to manage it. Also, while configuring and maintaining such a network it is ideal to have all reconfigurations occur as quickly as possible because a network that is in the process of being configured (not completed) runs the risk of not operating correctly in failure situations. The huge effort of maintaining these higher levels means configurations take longer, which increases the risk of non-ideal network service if a failure occurs.

### SUMMARY

The present invention comprises a method and apparatus for managing nodes of a network. In one embodiment, the invention is implemented as part of a computer based network management system. The system allows a network operator to select, view and modify the configuration of a logical group node at any level of a network hierarchy. The configuration of a logical group node may include, without limitation, logical group node attributes, summary addresses, and any other information that may be relevant to implementing the desired function of a logical group node. After a change is made to the configuration of a logical group node, the system automatically identifies all physical nodes that may potentially function as the logical group node whose configuration has changed, and causes the configurations of the logical group node to be updated on the identified physical nodes to reflect the change made to the logical group node. In this manner, modifications made to a logical group node are automatically propagated to all physical nodes, at lower levels of hierarchy therein, that might run the logical group node function, eliminating the need to manually update each physical node's configuration one physical node at a time. The invention may be used with any network that involves the aggregation of physical nodes into a hierarchy of logical group nodes, including, without limitation, networks using the PNNI and IP protocols.

### BRIEF DESCRIPTION OF THE DRAWINGS

Figure 1 is a schematic showing the physical layout of an example network.
Figure 2 is a schematic showing an example of how the nodes of the network of Figure 1 may be arranged into peer groups.
Figure 3 is a schematic showing a logical view of the peer group arrangement of Figure 2.
Figure 4 is a schematic showing an example of how the peer groups of the network of Figure 2 may be arranged into higher level peer groups.
Figure 5 is a schematic showing examples of reachable end system addresses for a portion of the network of Figure 4.
Figure 6 is a schematic showing a portion of the network hierarchy of Figure 4.
Figure 7 is a flow chart showing a procedure used in an embodiment of the invention to manage LGN configurations.
Figure 8 is a schematic of an apparatus comprising an embodiment of the invention.

### DETAILED DESCRIPTION OF THE FIGURES

A method and apparatus for automatically configuring nodes of a network is presented. In one or more embodiments, the invention comprises part of a network management system, such as, for example, the Alcatel 5620 Network Management System. In one or more embodiments, the i nvention is implemented by means of software programming operating on personal computers, computer workstations and or other computing platforms (or other network nodes designated with a network managementfunction). In the following description, numerous specific details are set forth to provide a thorough description of the invention. However, it will be apparent to one skilled in the art that the invention may be practiced without these specific details. In other instances, well-known features have not been described in detail so as not to obscure the invention.

The invention may be used with networks in which some or all of the physical nodes of the network are grouped into peer groups represented by logical nodes arranged in a multilevel hierarchy. An example of such a network is shown in Figures 1-6. The example network of Figures 1-6 uses the PNNI protocol. However, the invention is equally applicable to networks using other protocols, including the IP protocol.

In a hierarchical network, network nodes are logically arranged into groups of nodes, also referred to as "peer groups," that are represented by logical nodes, referred to herein as "logical group nodes," in the next higher level of the hierarchy. The function of a logical group node is at any point in time performed by one of the member nodes of the peer group represented by that logical group node. However, different members of the peer group may perform the function of logical group node at different points in time.

Typically, each node of a peer group is provided with some form of ranking criteria that is used by the members of the peer group to determine which member at any point in time will function as the peer group leader and consequently function as the logical group node at the next level of hierarchy representing the peer group at that level. Having multiple members of a peer group that are able to function as the logical group node creates redundancy in case there is an operational failure of the node that is currently functioning as the logical group node.

A hierarchical network is an abstract representation of a physical network that is constructed from configuration information assigned to the physical nodes of the network according to rules and procedures of the specific n etwork protocol being used. For example, for a network using the PNNI protocol, the network hierarchy is derived from peer group membership information included in configuration information of each physical node in the network.

Each physical node in a hierarchical network is typically configured with a peer group identifier that identifies the lowest level peer group of which the node is a member. If a physical node is capable of representing its peer group as a logical group node in higher level peer groups, the physical node needs to be configured with a peer group ID for such higher level peer group(s) as well. In addition, it needs to be configured with all other information needed to properly perform the function of the logical group node ("LGN configuration information"). In the case of a PNNI network, for example, LGN configuration information, in addition to a peer group ID, includes summary address criteria to be used by the logical group node to determine how to advertise reachability via the node within the (next higher level) peer group of which the logical group node is a member. The configuration information may include additional information such as, for example, administrative weight (a parameter used to calculate a relative cost of routing through a logical node), transit restrictions, PGL priority values, and other criteria needed to describe the state and capabilities of the logical group node.

In a typical hierarchical network, many physical nodes have the potential for functioning as a logical group node at multiple successive levels in the network hierarchy. As such, they needs to be provided with LGN configuration information for each hierarchy level at which they can potentially perform an LGN function.

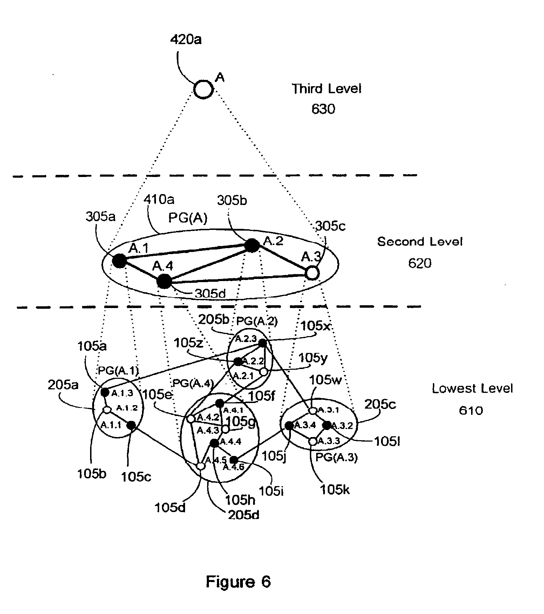

Figure 6 shows a portion of the network of Figure 4, namely the branch of the network represented at the top level by logical group node A 420a.

In Figure 6, broken horizontal lines divide the hierarchy into three distinct levels. Lowest level 610 includes lowest level nodes 105a-land 105w-z grouped into peer groups A.1 205a, A.2 205b, A.3 205c, and A.4 205d. Second level 620 includes logical group nodes A.1 305a, A.2 305b, A.3 305c and A.4 305d grouped into peer group A 410a, and third level 630 includes logical group node A 420a. In Figure 6, nodes that have been assigned the capability of running the LGN function (for LGN A 420a) in their respective parent peer groups are indicated by solid black circles. These are the nodes that may be configured to be potential peer group leaders, and should therefore be able to function as logical group nodes for their respective peer groups.

Logical node A 420a is the only node in third level 630. Because it is in the top level (for the simple hierarchical structure of Figure 6), it does not need to potentially function as a higher level node. Therefore, the only configuration information needed for logical group node A 420a, is the configuration information for logical group node A 420a itself. This information will be referred to as "CfgLGN(A)." The configuration information needed for logical group node A 420a is shown in Table 5.

**Table 5:**

| Configuration Information for Third Level Logical Nodes | |
|---|---|
| Third Level Logical Node | Third Level Conf. Inf. |
| A | CfgLGN(A) |

The next level is second level 620. Second level 620 contains the four logical nodes A.1 305a, A.2 305b, A.3 305c and A.4 305d. Like logical group node A 420a in third level 630, each of the logical group nodes 305a-d need to contain their own configuration information. In other words, node A.1 305a should contain CfgLGN(A.1), node A.2 305b should contain CfgLGN(A.2), node A.2 305c should contain CfgLGN(A.3) and node A.4 305d should contain CfgLGN(A.4).

In addition, logical group nodes A. 1305a, A.2 305b and A.4 305d have been assigned the ability to run the function of LGN A 420a. They therefore should be prepared to perform the function of logical group node A 420a in third level 630. Accordingly, in addition to their own configuration information, they should also include the configuration information for logical group node A 420a. The configuration information needed for each of the logical nodes in second level 620 is shown in Table 6.

**Table 6:**

| Configuration Information for Second Level Logical Nodes | | |
|---|---|---|
| Second Level Logical Node | Second Level Conf. Inf. | Third Level Conf. Inf. |
| A.1 305a | CfgLGN(A.1) | CfgLGN(A) |
| A.2 305b | CfgLGN(A.2) | CfgLGN(A) |
| A.3 305c | CfgLGN(A.3) | None |
| A.4 305d | CfgLGN(A.4) | CfgLGN(A) |

The final level in the example of Figure 6 is lowest level 610, which contains the physical nodes that actually contain the configuration information for all higher level logical nodes.

The configuration information needed for each of the lowest level physical nodes can be determined by looking at each peer group of lowest level 610.

For example, PG(A.1) 205a includes lowest level physical nodes A.1.3 105a, A.1.2 105b and A.1.1 105c. Each of nodes 105a-c should contain its own configuration information. In addition, nodes A.1.3 105a and A.1.1 105c are capable of running the function of LGN A.1 305a. They should therefore also contain the configuration information needed to allow them to function as LGN A.1 (which is shown in the first row of Table 6 above). Table 7 shows the resulting configuration information needed by the physical nodes of PG(A.1) 205a:

**Table 7:**

| Configuration Information for PG(A.1) 205a | | | |
|---|---|---|---|
| Lowest Level Physical Node | First Level Conf. Inf. | Second Level Conf. Inf. | Third Level Conf. Inf. |
| A.1.1105c | Cfg(A.1.1) | CfgLGN(A.1) | CfgLGN(A) |
| A.1.2105b | Cfg(A.1.2) | None | None |
| A.1.3105a | Cfg(A.1.3) | CfgLGN(A.1) | CfgLGN(A) |

The configuration information needed by the physical nodes comprising the remaining peer groups in lowest level 610 can be found in the same manner. Table 8 shows the resulting configuration information needed by all physical nodes of lowest level 610 of Figure 6.

**Table 8:**

| Configuration Information for Lowest Level Nodes | | | |
|---|---|---|---|
| Lowest Level Physical Node | First Level Conf. Inf. | Second Level Conf. Inf. | Third Level Conf. Inf. |
| A.1.1105c | Cfg(A.1.1) | CfgLGN(A.1) | CfgLGN(A) |
| A.1.2105b | Cfg(A.1.2) | None | None |
| A.1.3105a | Cfg(A.1.3) | CfgLGN(A.1) | CfgLGN(A) |
| A.2.1 105y | Cfg(A.2.1) | None | None |
| A.2.2105z | Cfg(A.2.2) | CfgLGN(A.2) | CfgLGN(A) |
| A.2.3105x | Cfg(A.2.3) | CfgLGN(A.2) | CfgLGN(A) |
| A.3.1 105w | Cfg(A.3.1) | None | None |
| A.3.2 105l | Cfg(A.3.2) | CfgLGN(A.3) | None |
| A.3.3105k | Cfg(A.3.3) | None | None |
| A.3.4 105j | Cfg(A.3.4) | CfgLGN(A.3) | None |
| A.4.1 105f | Cfg(A.4.1) | CfgLGN(A.4) | CfgLGN(A) |
| A.4.2105e | Cfg(A.4.2) | None | None |
| A.4.3105g | Cfg(A.4.3) | None | None |
| A.4.4 105h | Cfg(A.4.4) | CfgLGN(A.4) | CfgLGN(A) |
| A.4.5105d | Cfg(A.4.5) | None | None |
| A.4.6105i | Cfg(A.4.6) | CfgLGN(A.4) | CfgLGN(A) |

Table 8 can be used to identify the physical nodes that need to be reconfigured if a configuration change is made to any of the logical nodes of the network of Figure 6. For example, if the network operator, by using a network management system or "network manager," wishes to make a change to the configuration information of LGN A 420a in the third level 630 (for example, by changing the summary address list for LGN A 420a, if the network is a PNNI network), all physical nodes that contain configuration information for logical group node A 420a need to be individually reconfigured. From Table 8 it can be seen that the affected physical nodes are nodes A.1.1 105c, A.1.3 105a, A.2.2 105z, A.2.3 105x, A.4.1 105f, A.4.4 105h and A.4.6 105i. Thus a simple change to a single logical node in third level 630 requires the manual reconfiguration of seven separate physical nodes in lowest level 610.

In practice, hierarchical networks are much more complex than the simple network of Figure 6, typically including hundreds of nodes and up to 10 hierarchy levels. In such networks, identifying the physical nodes affected by a change in configuration information of a higher level logical node and then manually making the required changes in the identified physical nodes can be an extremely difficult and time consuming task.

The present invention provides a method for making configuration changes to logical nodes of a network. The invention allows a network operator to specify the configuration information for any particular logical group node at any level in the hierarchy. The invention identifies the physical node(s) affected by the change, and automatically updates the configuration of the identified physical node(s) that might function as the logical node without requiring further user intervention.

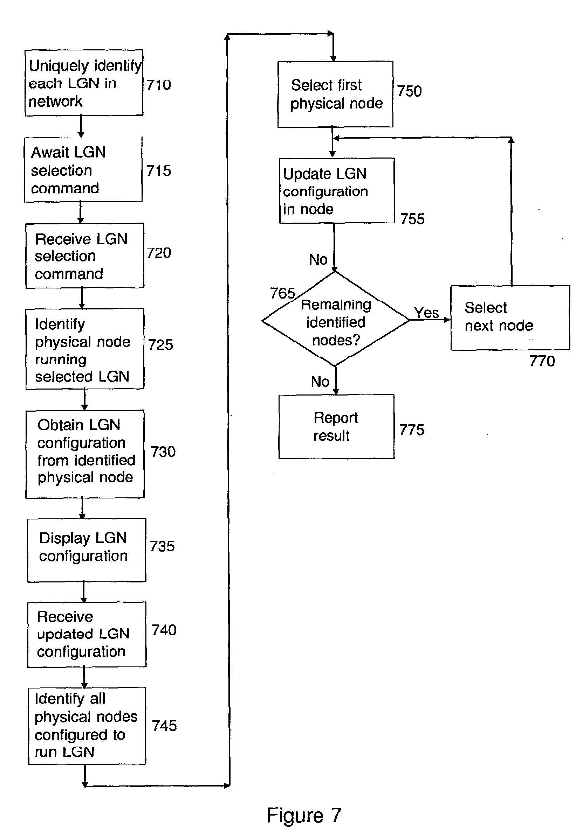

Figure 7 shows an embodiment of a method used for updating configuration information of logical nodes of a network in an embodiment of a network management system comprising the invention. Although some of the terms used to describe the method of Figure 7 are terms associated with PNNI networks, it will be understood that the invention is not limited only to PNNI networks but can be used with other networks as well.

At step 710, all logical group nodes in the network under management are uniquely identified such that a particular LGN can be unambiguously selected by a user. In one embodiment, in the case of a PNNI network, a logical group node is identified using the LGN's peer group ID as well as the peer group ID of its direct child peer group (both of which I D's are included in the LGN's configuration information). This information may be obtained by the management system, for example, by querying each physical node in the network for configuration information for the physical node itself and any LGN's for which the physical node has been supplied with configuration information.

At step 715, a LGN selection command is awaited. For example, in one embodiment, a graphical user interface is provided that contains a graphical representation of the network. A number of viewing levels are displayed that provide varying degrees of detail. In one example, a top viewing level provides a view of the LGN's in the highest level of the hierarchy. Other levels can be selectively displayed. For example, in one embodiment, double-clicking on an LGN using a cursor control device (such as a mouse) displays a view of the LGN's direct child peer group. Double-clicking on any member of the direct child group, in turn, displays the next lower child peer group, and so on. Any other user input device or interface allowing a user to identify and select any particular LGN, including, without limitation, a text based list of LGN's (listing all LGNs in the network, in a peer group, etc.), may be used.

At step 720, a LGN selection command is received from a user. For example, the LGN selection command may comprise a single click received from a mouse or other cursor control device after a cursor has been positioned over the LGN being selected. At step 725, the physical node "running" the selected LGN is identified. The phrase "running an LGN" refers to a physical node providing the LGN function at a particular point in time. In one e mbodiment, for example, the network management system maintains a list of physical nodes running each LGN using peer status information sent by a physical switch after being called upon to function as the LGN (in a PNNI network, the peer group leader functions as the LGN for the peer group).

At step 730, the current configuration of the LGN is obtained from the physical node currently running the LGN function as identified in step 725. Alternatively, the current configuration information for the LGN may have been stored in a separate database by the network management system, in which case the current configuration information is retrieved from the database. In either case, the current configuration information is displayed to the user at step 735. In one embodiment, for example, the configuration information is displayed to the user as an editable table of name-value pairs.

At step 740, updated LGN configuration information is received from the user. In one embodiment, for example, the user provides updated configuration information by modifying the current configuration information displayed at step 735.

At step 745, all other physical nodes (in addition to the node identified at step 725) configured to function as the selected LGN are identified. Such nodes may be identified, for example, by identifying all physical nodes that have been configured with the LGN's peer group ID.

At step 750, the first of the identified physical nodes is selected. For example, the first node selected at step 750 may be the node that currently functions as the selected LGN.

The configuration information for the LGN in the physical node is updated with the new information at step 755 using a communications protocol compatible with said network management system and said physical node, such as, for example, the SNMP ("Simple Network Management Protocol).

At step 765, a determination is made as to whether there is any remaining physical node identified at step 745 that has not yet been either updated with the new configuration information or found to be incompatible with the current configuration information. If it is determined that there is at least one such remaining physical node, the next physical node identified at step 745 is selected at step 770 and the process returns to step 755. If it is determined that no further unprocessed physical nodes remain, the results of the update process are reported to the user at step 775, and the process is complete. The results may include, for example, a message that all appropriate physical nodes have been successfully updated, and/or appropriate error messages if one or more physical nodes could not be updated. In an embodiment in which the management system keeps a local database of LGN configuration information, that configuration information may be updated as well.

Figure 8 is a schematic of an apparatus comprising an embodiment of the invention. The embodiment of Figure 8 comprises a central processing unit (CPU) 800, a display device 850, a keyboard 880 and a mouse or trackball 890. CPU 800 may, for example, comprise a personal computer or computer workstation containing one or more processors that execute computer software program instructions. In the embodiment of Figure 8, CPU 800 comprises computer program instructions for a network management system 810, which comprise computer program instructions 820 for sending and receiving messages via network communications interface 830, which connects CPU 800 to network 840.

Display device 850, which may, for example, comprise a CRT or LCD computer display device, comprises a display area 855 for displaying graphical and textual information to a user. Display area 855 may also comprise a touch screen or other mechanism for accepting input from a user. Display device 850 together with keyboard 880 and mouse or trackball 890 form a user interface that provides information to and accepts information from a user.

Thus, a method and apparatus for configuring the nodes of a network has been presented. Although the invention has been described using certain specific examples, it will be apparent to those skilled in the art that the invention is not limited to these few examples. For example, although the invention has been described with respect to PNNI networks, the invention is applicable, with substitution of terminology, as appropriate, to other networks as well (such as OSPF areas in IP networks). Other embodiments utilizing the inventive features of the invention will be apparent to those skilled in the art.

## Claims

1. A method for configuring nodes of a network comprising the steps of:
receiving updated configuration information for a logical node;
identifying a plurality of physical nodes capable of functioning as said logical node;
automatically providing said updated configuration information to said plurality of identified physical nodes.

2. The method of claim 1 further comprising the step of displaying a representation of said network prior to receiving said updated configuration information.

3. The method of claim 2wherein said network comprises a plurality of levels, and wherein said step of displaying a representation of said network comprises displaying a representation of said plurality of levels.

4. The method of claim 2 wherein said step of displaying a representation of said network comprises displaying a representation of said logical node.

5. The method of claim 1 further comprising the step of displaying current configuration information for said logical node.

6. The method of claim 5 wherein said step of receiving said updated configuration information comprises receiving modified current configuration information.

7. The method of claim 1 wherein said nodes of said network comprise switching systems.

8. The method of claim 1 wherein said step of identifying said plurality of physical nodes comprises identifying physical nodes containing configuration information for said logical node.

9. The method of claim 1 further comprising the step of receiving a logical node selection command selecting said logical node prior to said step of receiving updated configuration information for said logical node.

10. The method of claim 1 wherein said logical node occupies a first level in said hierarchy, and wherein said step of identifying said plurality of physical nodes comprises identifying nodes at a second level of said hierarchy comprising configuration information for said logical node.

11. The method of claim 10 wherein said configuration information for said logical node comprises a peer group identifier.

12. The method of claim 1 wherein said logical node occupies a first level in said hierarchy, and wherein said step of identifying said plurality of physical nodes comprises identifying nodes at successively lower levels comprising configuration information for said logical node.

13. The method of claim 12 wherein said configuration information for said logical node comprises a peer group identifier.

14. The method of claim 9 further comprising the step of obtaining current configuration information for said logical node prior to receiving said updated configuration information for said logical node.

15. The method of claim 14 wherein said step of obtaining current configuration information for said logical node comprises identifying a first physical node currently functioning as said logical node.

16. The method of claim 14 wherein said step of obtaining current configuration information for said logical node comprises obtaining said current configuration information from a configuration information database.

17. The method of claim 15 wherein said step of identifying said first physical node comprises querying a database comprising information identifying physical nodes functioning as logical nodes of said network.

18. The method of claim 10 wherein said nodes at said second level of said hierarchy comprise logical nodes.

19. The method of claim 1 further comprising the step of identifying a plurality of logical nodes of said network prior to said step of receiving updated configuration information for said logical node.

20. The method of claim 19 wherein said step of identifying a plurality of logical nodes of said network comprises obtaining logical node configuration information from a plurality of physical nodes of said network.

21. The method of claim 2 wherein said step of displaying said representation of said network comprises displaying said representation on a computer display screen.

22. The method of claim 1 wherein said step of automatically providing said updated configuration information comprises communicating with said plurality of identified nodes utilizing a compatible communications protocol.

23. The method of claim 22 wherein said communications protocol comprises SNMP.

24. The method of claim 1 wherein said nodes of said network utilize a PNNI protocol.

25. The method of claim 1 wherein said nodes of said network utilize an IP protocol.

26. The method of claim 1 wherein said current configuration information for said logical node comprises a first peer group identifier for said logical node and wherein said identifying step comprises identifying a plurality of lower level nodes comprising said first peer group identifier.

27. The method of claim 19 further comprising the step of uniquely identifying each of said plurality of logical nodes of said network.

28. The method of claim 27 wherein said step of uniquely identifying each of said plurality of logical nodes of said network comprises identifying said logical nodes via peer group identifiers and child peer group identifiers.
